# FASCICULE DE BREVET EUROPEEN

(11) **EP 0 476 121 B1**
(45) Date de publication et mention de la délivrance du brevet: **20.09.1995**
(21) Numéro de dépôt: 91907730.5
(22) Date de dépôt: 04.04.1991
(51) Int. Cl.: B29C 70/00, F16J 15/10, B29C 45/00

(54) **PROCEDE POUR L'AMELIORATION DES PROPRIETES MECANIQUES ET D'ETANCHEITE DE GARNITURES D'ETANCHEITE EN ELASTOMERE, ET GARNITURES OBTENUES A L'AIDE DE CE PROCEDE**
VERFAHREN ZUM VERBESSERN DER MECHANISCHEN UND DER DICHTUNGSEIGENSCHAFTEN VON ELASTOMERDICHTUNGEN UND NACH DIESEM VERFAHREN HERGESTELLTE DICHTUNGEN
PROCESS FOR IMPROVING MECHANICAL AND SEALILNG PROPERTIES AND OF ELASTOMERIC SEALING PACKINGS, AND PACKINGS OBTAINED BY SAID PROCESS

(30) Priorité: 06.04.1990 FR 9004419
(43) Date de publication de la demande: 25.03.1992
(73) Titulaire: KSB S.A., 92400 Courbevoie (FR)
(72) Inventeur: DUBOIS, Jean-Paul, F-33230 Coutras (FR)
(74) Mandataire: Mettler, Antje
(86) Numéro de dépôt international: FR9100272
(87) Numéro de publication internationale: WO9115356

(56) Documents cités:
- EP-A- 0 316 962
- FR-A- 807 592
- GB-A- 2 015 414
- US-A- 2 342 556

## Description

### Domaine technique

La présente invention concerne un procédé pour l'amélioration des joints ou garnitures d'étanchéité dynamiques en élastomère utilisés notamment, mais non exclusivement, dans les organes de robinetterie.

### État de la technique

D'une manière générale, on sait que dans les applications de ce genre, l'étanchéité est réalisée en engendrant une pression de contact entre deux pièces dont l'une, au moins partiellement en élastomère, constitue le joint, tandis que l'autre, par exemple en métal, constitue l'obturateur.

L'attente de l'utilisateur est que la pression de contact créée pour réaliser l'étanchéité ait, de façon durable, une valeur supérieure à une valeur minimale prédéterminée.

Or, de par leurs fonctions, les joints dynamiques sont alternativement sollicités et, par conséquent, soumis ou non à la pression de contact. Il importe donc que l'étanchéité soit conservée dans le temps indépendamment des mulitples sollicitations exercées sur le joint.

Par ailleurs, le passage de l'état non sollicité à l'état sollicité fait que le joint est soumis à des efforts divers et à des contraintes variées telles que frottement, allongement, cisaillement etc., qui mettent en jeu ses propriétés intrinsèques et, en particulier, les propriétés de relaxation de l'élastomère, son comportement visco-élastique, ses propriétés mécaniques et la variation de ces propriétés en fonction de la température et, par conséquent, les limites d'utilisation du joint (domaines de pression, de température etc.) qui sont intimement liées à ces propriétés.

Actuellement, la fabrication des joints fait appel à des familles appropriées d'élastomères, les formulations ainsi que les techniques de fabrication des pièces demeurant classiques.

Ainsi, ces pièces peuvent être réalisées à l'aide de mélange de caoutchouc de base d'élaboration différente: SBR, EPDM, EPM, butadiène-acrylanitrile, polychloroprène, polyéthylène chlorosulfoné, polymères fluorés, etc...

La formulation de ces caoutchoucs est classique, à base de charges renforçantes telles que du noir de carbone de divers grades, de plastifiants et de systèmes de vulcanisation réalisant des liaisons des types mono- ou polysulfures ou des liaisons de type carbone-carbone.

Les joints d'étanchéité sont réalisés par moulage (qui opère la vulcanisation de l'élastomère); le moulage peut être réalisé par injection, par compression-transfert ou par compression d'une ébauche.

L'invention a plus particulièrement pour but d'améliorer les caractéristiques et le comportement de joints précédemment décrits.

Le document FR-A 807 592 décrit de mélanger de courts tronçons d'éléments déformables résistants, tels que des fils, ficelles ou cordes textiles, capables de résister à des efforts de tension considérables et une masse de caoutchouc possédant de l'élasticité. Cette matière élastique qui est mélangée à ces tronçons, est aplati pour les obliger à s'étendre dans la même direction générale, résultant en des feuilles planes minces. Ensuite, l'objet désiré est formé de ces feuilles et confectionné selon la forme lamellaire approprié. Pour relier les lamelles les unes aux autres, une phase de vulcanisation est prévu, menant à la forme finale.

### Exposé de l'invention

A cet effet, l'invention propose une technique de conformation qui consiste en un moulage par injection ou par compressiontransfert, où l'orientation des fibres incluses dans l'élastomère sera conférée grâce à une disposition et une orientation appropriées des buses ou des canaux utilisés pour effectuer l'injection ou le transfert dans la cavité du moule, cette technique de conformation opérant en même temps la vulcanisation de l'élastomère.

La technique de conformation utilisée dans le procédé selon l'invention, peut consister en une technique d'injection de compression ou même de compression-transfert.

Dans le cas d'une technique de moulage par injection, l'orientation des fibres incluses dans l'élastomère sera conférée grâce à une disposition et une orientation appropriées des buses d'injection de la matière de moulage, étant entendu que les fibres s'orientent sensiblement dans le sens de l'écoulement de la matière.

Pour le principe de moulage par compression-transfert, des canaux d'injection sont reliés à une chambre de compression qui renferme une matière de moulage incluant les fibres. Le transfert de la matière vers le moule est provoqué par sa compression, à l'intérieur de la chambre par un piston. Ici aussi, l'orientation des fibres est fonction du mode d'écoulement dans les canaux et dans la cavité de moulage.

Ainsi, par exemple, dans le cas du moulage d'un joint d'étanchéité de forme cylindrique ou torique, les buses d'injection déboucheront au niveau des faces radiales du joint, parallèlement à l'axe longitudinal de celui-ci.

Dans ce cas, les fibres s'orienteront dans la matière, sensiblement parallèlement audit axe.

Lors de l'injection de la composition d'élastomère et de fibres par une pluralité de buses d'injection axées tangentiellement à la surface intérieure, les fibres s'orientent spontanément dans l'axe des buses et se disposent donc à l'intérieur du moule concentriquemment à l'axe principal du moule et donc parallèlement à la surface inférieure.

Pour la réalisation d'une garniture d'étanchéité d'un robinet à papillon, le moule présente une cavité de section en forme de C. L'injection est réalisée ici à l'aide de buses ou de canaux débouchant au niveau de la région angulaire adjacente à la surface bordant l'âme de la forme en C. L'orientation des fibres à l'intérieur de la pièce moulée est obtenue grâce aux propriétés d'écoulement de la matière dans les canaux et/ou dans le volume intérieur du moule.

Les buses ou canaux pourront être orientés obliquement par rapport à la surface, perpendiculairement, ou même tangentiellement.

Avantageusement, les fibres seront orientées de manière à s'entendre sensiblement parallèlement à la portée de contact du joint qui assure l'étanchéité dynamique.

Dans ces conditions, l'élastomère constituant le joint présentera des propriétés anisotropes et offrira une résistance maximale aux efforts exercés sur la portée de contact du joint, par exemple par le papillon d'un robinet à papillon. En particulier, la résistance à la déchirure du joint d'étanchéité se trouve améliorée de façon importante à la température ambiante. Par ailleurs, cette solution permet de mieux maîtriser les phénomènes de fluage de l'élastomère lorsqu'il est soumis à une compression, et supprimer le risque de propagation des entailles qui pourraient être formées dans le joint.

Les fibres utilisées dans le procédé selon l'invention pourront, par exemple, consister en des fibres de cellulose ou de carbone, ou en des fibres aramides.

Dans le cas de fibres celluloses, on utilise, en général, des fibres dites "courtes" de longueur variable de 2 à 12 mm, avec des facteurs de forme de rapport longueur/diamètre compris entre 100 et 200, avec une valeur optimale vers 140.

Dans le cas de fibres aramides, on utilise des fibres de longueur moyenne de 6 mm avec des diamètres de l'ordre de 12 µ. Ces valeurs peuvent varier comme précédemment de 2 à 12 mm, mais le facteur de forme optimale est, dans ce cas, autour de 500.

La formulation de l'élastomère est de type classique avec, cependant, une adjonction de produits de type HMMM (Hexa methoxy methyl melamine) à des taux allant de 1 % à 3 % et des fibres aramides à des taux de 3 % à 15 % en poids.

Le HMMM a pour rôle, par réaction chimique sous l'effet de la température, de provoquer un lien chimique avec l'ensimage de la fibre (ensimage = traitement de surface de la fibre permettant sa liaison ultérieure avec le caoutchouc) et les molécules du polymère. Le produit est utilisable pour les fibres de type cellulose et les fibre de type aramide.

Dans le cas où l'on utilise des fibres de carbone, on utilise, de préférence, au HMMM le système HRH (Hexaméthylène tétramine, Résorcinol, Silice), ce système pouvant être également utilisé pour les fibres coton et cellulose.

Le taux de produits ajoutés à la formulation est sensiblement proportionnel au taux de fibres employé dans le mélange de caoutchouc.

D'excellents résultats ont été obtenus en utilisant les compositions suivantes:

### Pour des mélanges caoutchouc renforcés en fibres aramides:

| | | |
|---|---|---|
| pour | 3 parties de fibres | variable de 1 à 15 |
| | 1 partie de HMMM | proportionnellement aux fibres |
| | 5 parties de silice | proportionnellement aux fibres |

### Pour les fibres celluloses:

| | | |
|---|---|---|
| pour | 7 parties de fibres | variable de 1 à 15 |
| | 0,6 partie de HMMM | proportionnellement aux fibres |
| | 5 parties de silice | proportionnellement aux fibres |

### Pour les systèmes avec HRH:

| | | |
|---|---|---|
| pour | 5 parties de fibres | variable de 1 à 15 |
| | 2 à 3 parties de Résorcinol | fixe |
| | 1,5 partie de Hexaméthylène | fixe |
| | 5 parties de Silice | variable de 3 à 15 proportionnellement aux fibres |

Des essais réalisés à l'aide de garnitures d'étanchéité pour vannes-papillon, obtenues conformément au procédé selon l'invention, on fait apparaître de nombreux avantages parmi lesquels on mentionnera les suivants qui ont été constatés pour un mélange de type EPDM:
- une augmentation des modules sécants (module de Young):
   - le module à 100 % d'allongement est augmenté de 30 %,
   - le module à 30 % d'allongement est doublé.

La rigidité mécanique du caoutchouc est modifiée en particulier avec des faibles allongements (de 5 à 10 %):
- une augmentation de la résistance au déchirement à chaud,
- une modification de la relaxation évaluée par un essai non normalisé de maintien en pression de la vanne.

Une garniture d'étanchéité selon la revendication 11 a l'avantage que la longévité et la durabilité augmentent. On constate une amélioration de la pression de service admissible, de la résistance à chaud et une augmentation de la température de service et du maintien de l'étanchéité dans le temps.

### Présentation des différentes figures

Des modes d'éxecution du procédé selon l'invention seront décrits ci-après, à titre d'exemples non limitatifs, avec référence aux dessins annexés dans lesquels:
Les figures 1a et 1b sont des représentations schématiques illustrant un premier mode de moulage par injection de type tangentiel, la figure 1a montrant le moule et la figure 1b le produit obtenu dans ce moule;
Les figures 2a et 2b sont des représentations similaires à celles des figures 1a et 1b pour un moulage de type non tangentiel;
Les figures 3a, 3b et 4a, 4b illustrent deux modes d'injection dans lesquels l'orientation privilégiée des fibres est obtenue en agissant sur les particularités de l'écoulement de la matière dans les canaux d'injection et/ou dans la cavité de moulage (les figures 3a et 4a étant des demi-coupes axiales du moule et les figures 3b et 4b étant des coupes transversales de garnitures réalisées à partir desdits moules;
Les figures 5a, 5b, et 6a, 6b sont des représentations schématiques respectivement analogues aux figures 3a, 3b et 4a, 4b, illustrant le principe du moulage par compression-transfert.

### Modes de réalisation

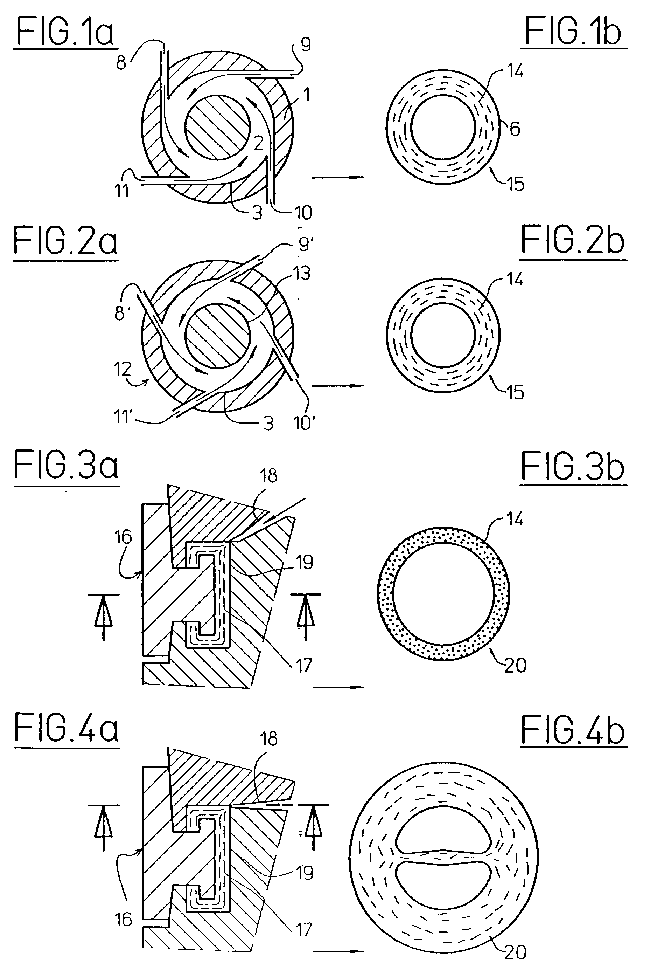

Dans l'exemple représenté sur la figure 1a, le moule 1 présente une cavité 2 en forme de tronçon tubulaire de section circulaire, dans laquelle débouche une pluralité de buses d'injection 8, 9, 10, 11 axées tangentiellement à la surface cylindrique intérieure 3 du moule 1. Lors de l'injection de la composition d'élastomère et de fibres, les fibres 14 s'orientent spontanément dans l'axe des buses 8 à 11 et se disposent donc à l'intérieur du moule 1 concentriquement à l'axe principal du moule 1 et donc parallèment à la surface cylindrique 6 de la pièce 15 qui peut, par exemple, consister en une garniture assurant une étanchéité dynamique.

Un résultat similaire pourrait être obtenu grâce à un moule 12 du type de celui représenté figure 2a dans lequel débouchent des canaux d'injection 8' à 11' qui ne sont pas tangentiels à la surface intérieure 3 du moule mais dont les axes sont cependant tangents à des cercles concentriques à l'axe principal du moule (matérialisé ici par le noyau 13).

On constate qu'ici aussi, les fibres 14 sont disposées concentriquement à l'axe principal de la pièce 15.

Dans l'exemple représenté sur la figure 3a, le moule 16 présente une cavité 17 de section en forme de C. L'injection est réalisée ici à l'aide d'une pluralité de canaux 18 débouchant au niveau de la région angulaire adjacente à la surface 19 bordant l'âme de la forme en C. L'orientation des fibres 14 à l'intérieur de la pièce moulée 20 est obtenue grâce aux propriétés d'écoulement de la matière dans les canaux 18 et/ou dans le volume intérieur du moule.

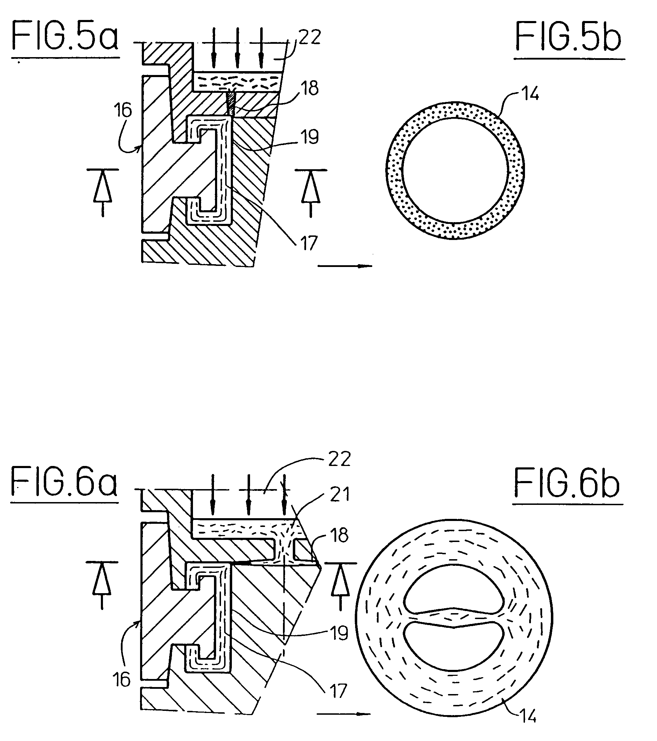

Les canaux 18 pourront être orientés obliquement par rapport à la surface 19, comme représenté figure 3a, perpendiculairement, comme représenté figures 4a et 6a, ou même tangentiellement, comme représenté figure 5a.

Les figures 5a et 6a, qui permettent d'illustrer le principe de moulage par compression-transfert, montrent un moule 16 similaire à ceux représentés sur les figures 3a et 4a, dans lesquels les canaux d'injection 18 sont reliés à une chambre de compression 21 qui renferme une matière de moulage incluant les fibres 14. Le transfert de la matière vers le moule 16 est provoqué par sa copmression, à l'intérieur de la chambre 21, par un piston 22. Ici aussi, l'orientation des fibres 14 est fonction du mode d'écoulement dans les canaux 18 et dans la cavité de moulage 17 (nappes).

Il convient d'insister sur le fait que le renforcement du mélange et de l'anisotropie par orientation préférentielle des fibres permet de modifier les caractéristiques de l'élastomère et, en particulier, son comportement visco-élastique, ce qui pemet notamment d'améliorer:
- sa résistance aux sollicitations et, en particulier, sa résistance à la déchirure à chaud,
- sa tenue à chaud,
- la permanence de la pression de contact qu'il exerce par exemple sur un obturateur.

### Application industrielle

Le procédé selon l'invention s'applique particulièrement à la réalisation de garnitures d'étanchéité de robinets et, plus particulièrement:
- aux manchettes de vannes à papillon centré,
- aux joints de vanne à papillon décalé et aux joints dynamiques de robinets réalisés par extrusion,
- aux membranes de vannes à membrane par amélioration de la résistance à la déchirure qu'il procure.

Dans ces applications, on constate une amélioration:
- de la pression de service admissible,
- de la résistance à chaud et augmentation de la température de service,
- du maintien de l'étanchéité dans le temps.

## Revendications

1. Procédé pour l'amélioration des propriétés mécaniques et d'étanchéité de garnitures d'étanchéité en élastomère destinées à assurer une étanchéité dynamique, ce procédé comportant lors de la fabrication de la garniture, une phase de préparation de l'élastomère consistant à adjoindre à la composition d'élastomère des fibres courtes (14,32), présentant une longueur moyenne de l'ordre de 2 à 12 mm, puis une phase de conformation et de vulcanisation de cet élastomère, effectuant la phase de conformation en utilisation une technique de conformation incluant un processus d'écoulement de l'élastomère permettant d'obtenir une orientation préférentielle des fibres (14, 32) à l'intérieur de la garniture réalisée, **caractérisé en ce que** cette technique de conformation consiste en un moulage par injection ou par compression-transfert où l'orientation des fibres (14) incluses dans l'élastomère est obtenue grâce à une disposition et une orientation appropriées des buses (8 à 11; 8' à 11' ) ou des canaux (18) utilisées pour effectuer l'injection ou le transfert dans la cavité (2;17) du moule (1;12;16), cette technique de conformation opérant en même temps la vulcanistion de l'élastomère.

2. Procédé selon la revendication 1 pour la fabrication d'une garniture d'étanchéité de forme cylindrique ou torique, caractérisé en ce que les buses d'injection débouchent au niveau des faces radiales de la garniture, parallèlement à son axe principal.

3. Procédé selon la revendication 1, pour la fabrication d'une garniture d'étanchéité (15) présentant la forme d'un volume de révolution, caractérisé en ce que les buses d'injection (8 à 11; 8' à 11') débouchent tangentiellement à la surface de révolution de ce volume (3).

4. Procédé selon la revendication 1 pour la fabrication d'une garniture d'étanchéité (20) d'un robinet à papillon, la garniture d'étanchéité (20) présente principalement une partie tubulaire destinée à venir recouvrir l'alésage interne d'un robinet à papillon, deux rebords annulaires radiaux venant en retour sur les faces radiales du robinet, la partie tubulaire coopérant avec la tranche d'un obturateur pour assurer l'étanchéité amont/aval dudit robinet, caractérisé en ce que l'injection ou le transfert est réalisée à l'aide de buses d'injection (8 à 11; 8' à 11') ou de canaux (18) débouchant au niveau de la région angulaire adjacente à la partie tubulaire et à le ou les rebords annulaires.

5. Procédé selon l'une quelconque des revendications précédentes, caractérisé en ce que l'orientation des fibres (14, 32) est sensiblement parallèle à la portée de contact de la garniture (15) qui assure une étanchéité dynamique.

6. Procédé selon l'une quelconque des revendications précédentes, caractérisé en ce que les susdites fibres (14; 32) consistent en des fibres de carbone, en des fibres de cellulose ou en des fibres aramides

7. Procédé selon l'une quelconque des revendications précédentes, caractérisé en ce que les susdites fibres (14, 32) de cellulose ont un facteur de forme (longueur/diamètre) compris entre 100 et 200 avec une valeur optimale vers 140.

8. Procédé selon l'une quelconque des revendications 1 à 6, caractérisé en ce que les susdites fibres (14, 32) aramides présentent un facteur de forme optimale de l'ordre de 500.

9. Procédé selon l'une quelconque des revendications précédentes, caractérisé en ce que les susdites fibres (14, 32) sont de type cellulose ou de type aramide, et en ce que, dans ce cas, la formulation de l'élastomère est de type classique avec adjonction d'un composé de type HMMM (Hexa methoxy methyl melamine) à des taux allant de 1 % à 3 % et des fibres aramides à des taux de 3 % à 15 % en poids.

10. Procédé selon l'une quelconque des revendications 1 à 8, caractérisé en ce que les susdites fibres (14, 32) sont des fibres de carbone, de coton ou même de cellulose, et en ce que la formulation de l'élastomère est de type classique avec adjonction d'un complexe HRH (Hexaméthylène tétramine, Résorcinol, Silice), avec:
de 1 à 15 parties de fibres,
de 2 à 3 parties de Résorcinol,
de 1,5 parties de Hexaméthylène tétramine
de 3 à 15 parties de Silice.

11. Garniture d'étanchéité en élastomère pour assurer une étanchéité dynamique dans un robinet à papillon muni d'un obturateur, **caractérisée en ce qu**'elle comprend une pluralité de fibres (14, 32) enrobées dans l'élastomère et présentant une orientation préférentielle, parallèle à la surface contre laquelle vient porter la tranche de l'obturateur et perpendiculaire à l'obturateur lors de la pénétration de l'obturateur au moment de fermeture du robinet à papillon.

## Claims

1. Process for improving the mechanical and sealing properties of elastomeric packings used to ensure tightness under dynamic conditions, the process including, during the manufacture of the packing, an elastomer preparation phase designed to add short fibres (14, 32) to the elastomeric compound, which fibres have an average length of approx. 2 mm to 12 mm, and of a phase designed to shape and vulcanize said elastomeric compound, the shaping phase using a moulding technique including an elastomer dispensing process permitting said fibres (14, 32) to be aligned along a preferential direction within the completed packing, **characterized in that** said shaping technique consists in injection moulding or compression/transfer moulding designed to align fibres (14) within the elastomer by appropriately arranging and orienting the nozzles (8 to 11; 8' to 11') or the ducts (18) used for injecting or transferring material into the cavity (2, 17) of the mould (1; 12; 16), said shaping technique being applied while the elastomer is being vulcanized.

2. Process according to claim 1 for manufacturing cylindrical or torus-shaped packings (15) characterized in that injection nozzles (8 to 11; 8' to 11') open out onto the radial faces of the packing in parallel to its main axis.

3. Process according to claim 1 for manufacturing a packing (15) having the shape of a rotational solid, characterized in that the injection nozzles (8 to 11; 8' to 11') open out tangentially onto the rotational surface (3) of said solid.

4. Process according to claim 1 for manufacturing a packing (20) for a butterfly valve, said packing (20) consisting principally of a tubular part intended to cover the internal borehole of a butterfly valve, two radially annular rims returning upon the radial faces of the valve, the tubular part engaging the edge of a seal in a manner to ensure the upstream/downstream tightness of said valve, characterized in that injection or transfer is realized by means of injection nozzles (8 to 11; 8' to 11') or ducts (18) opening out at the level of the angular area next to the tubular part and to said annular rim or rims.

5. Process in accordance with any of the claims preceding, characterized in that the alignment of fibres (14, 32) is essentially parallel to the extent of the contact surface of packing (15) ensuring tightness under dynamic conditions.

6. Process in accordance with any of the claims preceding, characterized in that said fibres (14, 32) consist of carbon fibres, cellulose fibres or aramide fibres.

7. Process in accordance with any of the claims preceding, characterized in that said cellulose fibres (14, 32) have a shape (length/diameter) factor ranging from 100 to 200, the optimum being around 140.

8. Process in accordance with any of claims 1 through 6, characterized in that said aramide fibres (14, 32) have an optimum shape factor around 500.

9. Process in accordance with any of the claims preceding, characterized in that said fibres (14, 32) are cellulose or aramide grades, and in that, in such case, there is a classic elastomer formulation to which a type HMMM (hexamethoxymethylmelamine) is added at a percentage between 1% and 3%, as well as aramide fibres at a percentage by weight between 3% and 15%.

10. Process in accordance with any of claims 1 through 8, characterized in that said fibres (14, 32) are carbon, cotton or even cellulose fibres, and in that there is a classic elastomer formulation to which a HRH (hexamethylenetetramine, resorcinol, silica) complex is added as well as:
1 to 15 parts fibres,
2 to 3 parts resorcinol,
1 to 5 parts hexamethylenetetramine
3 to 15 parts silica

11. Elastomeric packing ensuring the tightness under dynamic conditions within a butterfly valve provided with an obturating member, **characterized in that** it comprises a plurality of elastomer-enrobed fibres (14, 32) preferentially aligned in parallel to the surface against which bears the edge of said obturating member, and perpendicularly to said obturating member while it penetrates whenever the butterfly valve is closed.

## Patentansprüche

1. Verfahren zum Verbessern der mechanischen und der Dichtungseigenschaffen von Elastomerdichtungen zur dynamischen Abdichtung, welches bei der Herstellung der Dichtung eine Vorbereitungsphase des Elastomers aufweist, während welcher der Elastomermischung kurze Fasern (14, 32) mit einer mittleren Länge in der Größenordnung von 2 bis 12 mm beigemengt werden, anschließend eine Phase zur Formgebung und Vulkanisierung dieses Elastomers, wobei die Phase der Formgebung mittels einer Formtechnik ausgeführt wird, die ein Fließvorgang des Elastomers beinhaltet, durch welchen eine vorzugsweise Ausrichtung der Fasern (14, 32) im Inneren der herzustellenden Dichtung erreicht wird, **dadurch gekennzeichnet**, daß diese Formtechnik als Spritzguß oder Transferpressen ausgebildet ist, wobei die Ausrichtung der im Elastomer eingebetteten Fasern (14) über eine geeignete Anordnung von Einspritzdüsen (8 - 11; 8' - 11') oder Kanälen (18) zur Bewirkung des Einspritzens oder des Transfers in den Hohlraum (2; 17) der Form (1; 12; 16) erhalten wird, und wobei bei dieser Formtechnik auch die Vulkanisierung des Elastomers durchgeführt wird.

2. Verfahren nach Anspruch 1 zur Herstellung einer zylindrischen oder torischen Dichtung (15), dadurch gekennzeichnet, daß die Einspritzdüsen (8 - 11; 8' - 11') im Bereich radialer Seitenflächen der Dichtung parallel zur Hauptachse der Dichtung einmündet.

3. Verfahren nach Anspruch 1 zur Herstellung einer Dichtung in Form eines Rotationsvolumens, dadurch gekennzeichnet, daß die Einspritzdüsen (8 - 11; 8' - 11') tangential zur Rotationsoberfläche dieses Volumens (3) einmünden.

4. Verfahren nach Anspruch 1 zur Herstellung einer Dichtung (20) einer Absperrklappe, wobei die Dichtung (20) im wesentlichen einen rohrförmigen Abschnitt zur Auskleidung der Durchgangsöffnung einer Absperrklappe, zwei radial umlaufende, nach außen umgeschlagene Ränder, die sich an den radialen Seitenflächen der Armatur rückwärts erstrecken, aufweist und der rohrförmige Abschnitt mit der Kante eines Absperrkörpers zur Sicherstellung der Abdichtung der Hoch- bzw. Niederdruckseite der Armatur zusammenwirkt, dadurch gekennzeichnet, daß die Einspritzung oder das Transferpressen mittels Einspritzdüsen (8 - 11; 8' - 11') oder Kanälen (18) erfolgt, welche in dem dem rohrförmigen Abschnitt und dem oder den umlaufenden Rändern benachbarten abgewinkelten Bereich einmünden.

5. Verfahren nach einem der vorgenannten Ansprüche, dadurch gekennzeichnet, daß die Ausrichtung der Fasern (14, 32) im wesentlichen parallel zu einer dynamischen Dichtung herstellenden Kontaktfläche der Dichtung (15) ist.

6. Verfahren nach einem der vorgehenden Ansprüche, dadurch gekennzeichnet, daß die obengenannten Fasern (14, 32) Karbonfasern, Zellulosefasern oder Aramidfasern sind.

7. Verfahren nach einem der vorgenannten Ansprüche, dadurch gekennzeichnet, daß die vorgenannten Zellulosefasern (14, 32) ein Formverhältnis (Länge/Durchmesser) zwischen 100 und 200 aufweisen, mit einem bevorzugten Wert bei 140.

8. Verfahren nach einem der vorgenannten Ansprüche 1 bis 6, dadurch gekennzeichnet, daß die Aramidfasern (14, 32) ein optimales Formverhältnis in der Größenordnung von 500 aufweisen.

9. Verfahren nach einem der vorgenannten Ansprüche, dadurch gekennzeichnet daß die Fasern (14, 32) Zellulosefasern oder Aramidfasern sind, und daß in diesem Fall das Elastomer ein aus einer bekannten Mischung unter Hinzufügung eines Bestandteils des Typs HMMM (Hexametoximethylmelamin) im Verhältnis von 1 bis 3 und Aramidfasern im Verhältnis von 3 bis 15 Gewichtsprozent aufweisen.

10. Verfahren nach einem der Ansprüche 1 bis 8, dadurch gekennzeichnet, daß die genannten Fasern (14, 32) Karbonfasern, Baumwoll- oder Zellulosefasern sind und daß die gebräuchliche Elastomermischung eine Beifügung eines HRH (Hexamethylentetramin, Resorcin, Kieselerde) enthält, mit:
- von 1 bis 15 Teilen Fasern,
- von 2 bis 3 Teilen Resorcin,
- von 1,5 Teilen Hexamethylentetramin,
- von 3 bis 15 Teilen Kieselerde.

11. Elastomerdichtung zur Herstellung einer dynamischen Dichtung einer einen Absperrkörper aufweisenden Absperrklappe, dadurch gekennzeichnet, daß die Dichtung eine Vielzahl von im Elastomer eingebetteten Fasern (14, 32) enthält, die eine vorzugsweise Ausrichtung parallel zur Oberfläche, gegen welche die Kante des Absperrkörpers anliegt und senkrecht zum Absperrkörper während des Eintauchens des Absperrkörpers im Augenblick des Schließens der Absperrklappe aufweist.
